(19) **Europäisches Patentamt / European Patent Office / Office européen des brevets**

(11) **EP 4 528 324 A1**

(12) **EUROPEAN PATENT APPLICATION**
published in accordance with Art. 153(4) EPC

(43) Date of publication:
26.03.2025 Bulletin 2025/13

(21) Application number: 23893430.1

(22) Date of filing: 27.09.2023

(51) International Patent Classification (IPC):
*G01S 11/06* (2006.01)

(86) International application number:
PCT/CN2023/121874

(87) International publication number:
WO 2024/109338 (30.05.2024 Gazette 2024/22)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 21.11.2022 CN 202211453840

(71) Applicant: **Nio Technology (Anhui) Co., Ltd**
**Hefei City, Anhui 230601 (CN)**

(72) Inventors:
• WANG, Cheng
Shanghai 201804 (CN)

• FENG, Pinyuan
Shanghai 201804 (CN)
• LI, Xiang
Shanghai 201804 (CN)
• HAN, Yiqi
Shanghai 201804 (CN)
• SHEN, Qizhuang
Shanghai 201804 (CN)
• XIAO, Baihong
Shanghai 201804 (CN)

(74) Representative: **Vossius & Partner**
**Patentanwälte Rechtsanwälte mbB**
**Siebertstrasse 3**
**81675 München (DE)**

(54) **RANGING METHOD BASED ON RECEIVED RADIO-SIGNAL STRENGTH, AND MEDIUM AND ELECTRONIC DEVICE**

(57)     The present invention provides a ranging method based on received radio signal strength, a medium, and an electronic device. The ranging method based on the received radio signal strength according to the present invention includes: acquiring signal strength and a channel of a received radio signal; acquiring a target path loss model corresponding to the channel from a path loss model set with a plurality of preset path loss models, where each of the path loss models is a corresponding relationship between a distance from a transmitting end to a receiving end and signal strength of a transmitted radio signal when the radio signal is transmitted through a corresponding preset channel, and preset channels corresponding to the plurality of path loss models are different from one another; and obtaining an estimated distance between a transmitting end and a receiving end of the received radio signal according to the corresponding target path loss model and the signal strength of the received radio signal. By adopting the method according to the present invention, fluctuation of measured radio signal strength values can be significantly reduced, thus improving ranging accuracy.

FIG.9

## Description

### CROSS-REFERENCE TO RELATED APPLICATION

The present application claims priority to Chinese Patent Application No.202211453840.4 filed on November 21, 2022, entitled "RANGING METHOD BASED ON RECEIVED RADIO SIGNAL STRENGTH, MEDIUM AND ELECTRONIC DEVICE", which is incorporated into the present application by reference in its entirety.

### TECHNICAL FIELD

The present invention relates to the field of radio ranging, and in particular, to a ranging method based on received radio signal strength, a medium, and an electronic device.

### BACKGROUND

It is a common technical means to determine a location by using received signal strength of a wireless communication system. For example, Apple's iBeacon system and common positioning methods based on automobile digital keys in recent years are all based on a Bluetooth technology for positioning. In addition, wireless communication technologies, such as WiFi and Zigbee, are also widely used for indoor positioning.

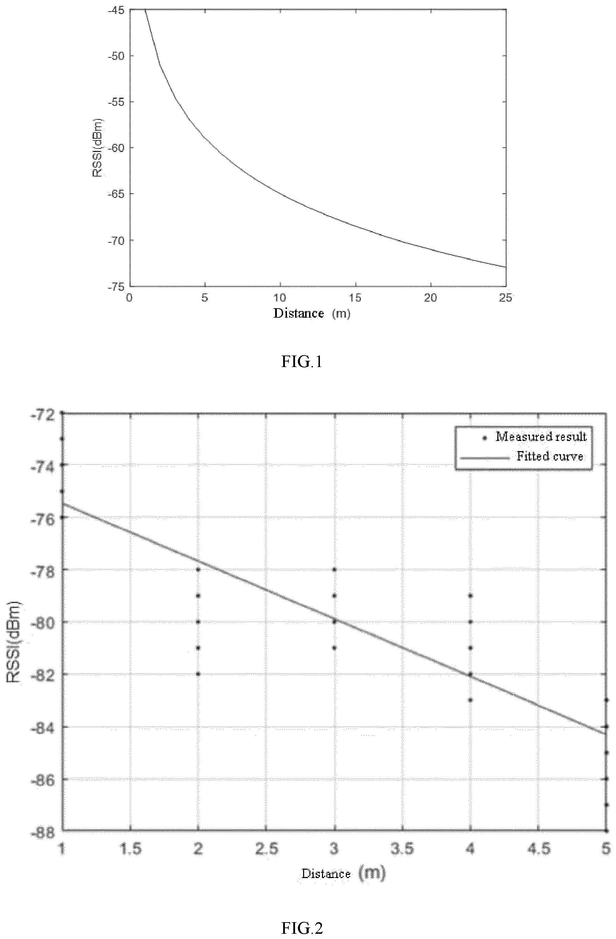

All the above technologies utilize a received signal strength indicator (RSSI) of a received radio signal to estimate a distance. The principle of implementing the RSSI-based ranging technologies is that a radio signal regularly attenuates with the increase of the distance. Taking a free space path loss model of radio waves as an example, Fig. 1 gives a relationship between the RSSI and the distance under a specific signal frequency (channel) and a specific transceiver antenna gain. Ideally, the RSSI monotonically decreases with the increase of the distance between a receiver and a transmitter, so the distance between a transmitting end and a receiving end can be estimated according to the RSSI measured at present.

However, in an actual system, the relationship between the RSSI and the distance is not an ideal monotonic function relationship. A RSSI measurement result is influenced by many factors. Fig. 2 is a known document: Myo Min Thein, Son Nguyen, Danielle Kennon. COMPARING THE ACCURACY OF BLUETOOTH LOWENERGY AND UWBTECHNOLOGY FOR IN-ROOM POSITIONING. WORCESTER POLYTECHNIC INSTITUTE, April 22, 2019, which gives a set of measured RSSI results, which shows 4 to 6 different RSSI values measured at each distance when the distance between a receiving end and a transmitting end changes. Taking the distance of 4 meters as an example, the measured RSSI dBm values are -79, -80, -81, -82 and -83 respectively, fluctuating within a range of 4 dBm.

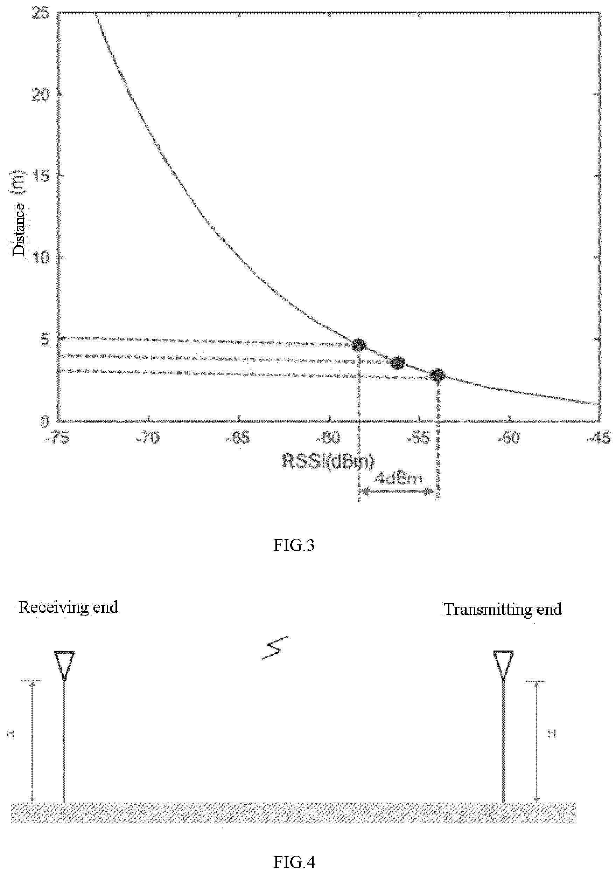

When ranging is performed by the actual system, the RSSI is measured first, and the distance is then estimated according to the RSSI. In order to estimate the distance, it is necessary to exchange an abscissa and an ordinate in Fig. 1 to obtain a RSSI-distance curve as shown in Fig. 3. It can be seen from Fig. 3 that RSSI fluctuation of 4 dBm measured in Fig. 2 can lead to a ranging error of about 2 meters, and this magnitude of error cannot satisfy scenarios having high requirements on positioning accuracy, such as automobile digital key positioning.

### SUMMARY

In order to overcome the aforementioned defects, the present invention is proposed to provide a ranging method based on received radio signal strength and an electronic device, which can solve or at least partially solve the technical problem that conventional ranging methods have errors and cannot satisfy scenarios having high requirements on positioning accuracy.

In a first aspect, the present invention provides a ranging method based on received radio signal strength, including the following steps:

acquiring signal strength and a channel of a received radio signal;
acquiring a target path loss model corresponding to the channel from a path loss model set with a plurality of preset path loss models, where each of the path loss models is a corresponding relationship between a distance from a transmitting end to a receiving end and signal strength of a transmitted radio signal when the radio signal is transmitted through a corresponding preset channel, and preset channels corresponding to the plurality of path loss models in the path loss model set are different from one another; and
obtaining an estimated distance between a transmitting end and a receiving end of the received radio signal according to the corresponding target path loss model and the signal strength of the received radio signal.

In a specific embodiment,

there are a plurality of received radio signals; and

the acquiring a target path loss model corresponding to the channel from a path loss model set with a plurality of preset path loss models includes:

acquiring a target path loss model corresponding to a channel of at least one target radio signal among a plurality of radio signals from the path loss model set;

the obtaining an estimated distance between a transmitting end and a receiving end of the received radio signal according to the corresponding target path loss model and the signal strength of the received radio signal includes:

for each of the target radio signals, obtaining a distance corresponding to signal strength of the target radio signal according to the corresponding path loss model; and

merging the distances corresponding to the signal strength of all the target radio signals to give the estimated distance between the transmitting end and the receiving end.

In a specific embodiment, the method further includes:

selecting a plurality of test channels;

for each of the test channels, collecting measured signal strength values when the transmitting end and the receiving end are at different distances to obtain a path loss model corresponding to the test channel; and

selecting path loss models constituting the path loss model set from the path loss models corresponding to the plurality of test channels.

In a specific embodiment, the selecting path loss models constituting the path loss model set from the path loss models corresponding to the plurality of test channels includes:
selecting all the path loss models among the path loss models corresponding to the plurality of test channels to constitute the path loss model set.
In a specific embodiment, the selecting path loss models constituting the path loss model set from the path loss models corresponding to the plurality of test channels includes:

comparing proximity of the path loss models of the test channels;

grouping all the path loss models according to the proximities;

selecting a path loss model in each group as a representative path loss model; and

using the representative path loss models in all the groups to constitute the path loss model set.

In a specific embodiment, the acquiring a target path loss model corresponding to a channel of at least one target radio signal among a plurality of radio signals from the path loss model set includes: acquiring a representative path loss model corresponding to the channel of the at least one radio signal.
In a specific embodiment, the collecting measured signal strength values when the transmitting end and the receiving end are at different distances to obtain a path loss model corresponding to the test channel includes:
linearly fitting the measured signal strength values when the transmitting end and the receiving end are at different distances to obtain the path loss model corresponding to the test channel.
In a specific embodiment, the acquiring signal strength and a channel of a received radio signal includes;

acquiring a plurality of radio signals transmitted by the transmitting end and received by a receiving end within a preset time interval; or

acquiring a plurality of radio signals transmitted by the transmitting end and received by a plurality of receiving ends respectively.

In a second aspect, an embodiment of the present invention provides a computer-readable storage medium in which a plurality of program codes are stored, where the program codes are suitable for being loaded and run by a processor to execute the aforementioned ranging method based on the received radio signal strength.

In a third aspect, an embodiment of the present invention provides an electronic device, which includes a processor and a storage device, where the storage device is suitable for storing a plurality of program codes, and the program codes are suitable for being loaded and run by the processor to execute the aforementioned ranging method based on the received radio signal strength.

In a fourth aspect, an embodiment of the present invention provides a vehicle, which includes the electronic device according to the third aspect of the present invention.

In a fifth aspect, an embodiment of the present invention provides a wireless communication system, including a mobile terminal as a transmitting end and a vehicle as a receiving end, where the vehicle is the vehicle according to the fourth aspect of the present invention.

The one or more technical solutions of the present invention mentioned above at least have one or more beneficial effects below:

In the technical solution of implementing the present invention, when the distance between the transmitting end and the receiving end is measured and estimated by utilizing the radio signal strength, a channel used in wireless communication is identified, and a more accurate distance result is then obtained according to the corresponding relationship between the signal strength and the distance under the specific channel, so the present invention is suitable for scenarios having high requirements on positioning accuracy, such as automobile digital key positioning.

## BRIEF DESCRIPTION OF DRAWINGS

The disclosure of the present invention will become easier to understand with reference to the accompanying drawings. It will be easily understood by those skilled in the art that these accompanying drawings are merely intended for illustration rather than intended to limit the protection scope of the present invention. In addition, like reference numerals in the accompanying drawings are intended to indicate like parts. Among the accompanying drawings,

Fig. 1 shows a functional relationship between a distance and a RSSI represented by a free space path loss model of the prior art;

Fig. 2 shows a set of measured results of a distance and a RSSI obtained in practice according to the prior art;

Fig. 3 shows estimated distance errors caused by RSSI fluctuation according to a free space path loss model of the prior art;

Fig. 4 shows an experimental system scenario according to an embodiment of the present invention;

Fig. 5 shows measured results of a distance and a RSSI obtained from separate channels 37, 38 and 39 and all the channels as a whole when the distance between a receiving end and a transmitting end is 1.5 meters in the aforementioned experimental system scenario;

Fig. 6 shows standard deviations of measured values of a RSSI obtained from separate channels 37, 38 and 39 and all the channels as a whole when the distance between the receiving end and the transmitting end changes from 0.5 meters to 4.5 meters in the aforementioned experimental system scenario;

Fig. 7 shows relationship curves between measured distances from a receiving end to a transmitting end and measured RSSIs in the aforementioned experimental system scenario;

Fig. 8 shows that path loss models are acquired by fitting data of relationship curves between measured distances from a receiving end to a transmitting end and measured RSSIs;

Fig. 9 shows a flowchart of main steps of a ranging method based on received radio signal strength according to an embodiment of the present invention;

Fig. 10 shows a flowchart of acquiring a path loss model corresponding to a channel from a path loss model set according to an embodiment of the present invention;

Fig. 11 shows a flowchart of constructing the path loss model set by using a representative path loss model in each group according to an embodiment of the present invention; and

Fig. 12 shows a structural block diagram of a ranging apparatus based on received radio signal strength.

**DETAILED DESCRIPTION**

Some embodiments of the present invention will be described below with reference to the accompanying drawings. It should be understood by those skilled in the art that these embodiments are merely intended to explain the technical principle of the present invention rather than limit the protection scope of the present invention.

In the description of the present invention, "module" and "processor" may include hardware, software, or a combination of both. A module may include a hardware circuit, various suitable sensors, a communication port, and a memory, and may also include a software part, such as program codes, or may be a combination of software and hardware. The processor may be a central processing unit, a microprocessor, an image processor, a digital signal processor, or any other suitable processor. The processor has data and/or signal processing functions. The processor may be implemented in a form of software, hardware or a combination of both. A non-transitory computer-readable storage medium includes any suitable medium capable of storing program codes, such as a magnetic disk, a hard disk, an optical disk, a flash memory, a read-only memory, and a random access memory. The term "A and/or B" means all possible combinations of A and B, such as only A, only B, or A and B. The term "at least one A or B" or "at least one of A and B" has a meaning similar to that of "A and/or B", and may include only A, only B, or A and B. The singular terms "a" and "this" may also include plural forms.

In order to solve the aforementioned technical problems, especially in order to meet the requirement of scenarios having high requirements on high positioning accuracy, the inventors found out the reason that affects ranging errors according to theoretical analysis and experiments, and designed a corresponding solution according to the reason.

In a communication theory, a path loss model of radio waves propagating in a free space is usually employed, such as the model described in the background. The model describes a relationship between signal strength received by an antenna of a receiving end and a power of a transmitting end. A receiving power of the antenna at a distance d from a transmitter is given by a Friis formula:

$$P_r(d) = P_t G_t G_r \left(\frac{\lambda}{4\pi d}\right)^2 \qquad\qquad (1)$$

where $P_t$ is the transmitting power, $P_r(d)$ is the receiving power, $G_t$ is a transmitting antenna gain, $G_r$ is a receiving antenna gain, $\lambda$ is a wavelength of carrier signals, and

$$\lambda = \frac{c}{f}$$

that is, $\lambda$ is inversely proportional to a carrier frequency f, and c is the speed of light.

Formula (1) indicates that the receiving power of the antenna of the receiver is related to not only the distance d between the receiver and the transmitter, but also a frequency of carrier signals. With the increase of the frequency (i.e. the decrease of the wavelength), the received signal power will decrease.

For a conventional narrowband communication system, an influence of the frequency on the RSSI is often ignored because a difference between the highest frequency and the lowest frequency in signals is small. A bandwidth of the conventional narrowband system is several hundred kHz. Even for a 4G system, a carrier bandwidth is 18 M, that is, the difference between the highest frequency and the lowest frequency in a channel is 18 M. However, for a Bluetooth system used in an automobile digital key positioning scenario, its working frequency range is 2.4 GHz to 2.4835 GHz, where the difference between the highest frequency and the lowest frequency is 83.5 MHz, so a change of the working frequency of the Bluetooth system has a greater influence on the RSSI than the conventional narrowband system.

In addition, the inventors found that for designed Bluetooth system hardware, a size of an antenna is fixed, but a frequency of Bluetooth signals is variable. The transceiver antenna gain of an actual system is designed for a specific frequency among 2.4 GHz to 2.4835 GHz, and will not remain constant in a full working frequency band of Bluetooth. When a frequency of a Bluetooth channel changes, an effective aperture of an antenna with a fixed size will also be affected by the frequency change, that is, $G_t$ and $G_r$ in Formula (1) will also be affected by the frequency change.

In a conventional communication system, a main purpose of studying the relationship between the RSSI and the distance is a link budget, so as to ensure that the system can always operate normally when the distance between the receiver and the transmitter does not exceed a certain limit. This distance is usually kilometer-level, but when ranging accuracy is expected to be submeter-level (e.g. in the automobile digital key positioning scenario), factors affecting the RSSI, such as the change of the signal frequency, need to be considered more comprehensively.

To this end, the inventors built an experimental system. As shown in Fig. 4, a Bluetooth chip used in modules of the transmitting end and the receiving end is NXP KW36. During the whole experiment, a height of the transmitting end and the receiving end from the ground is always 1.1 meters, and the distance between the transmitting end and the receiving end changes between 0.5 meters and 4.5 meters.

Taking Bluetooth 4.0 as an example, the Bluetooth system divides the working frequency range between 2.4 GHz and 2.4835 GHz into 40 RF channels with a channel spacing of 2 MHz, including 3 broadcast channels (channel indexes: 37, 38 and 39) and 37 data channels (channel indexes: 0 to 36).

In consideration of data transmission security, the Bluetooth data channels usually operate in a frequency hopping mode, that is, the signal frequency changes during data transmission.

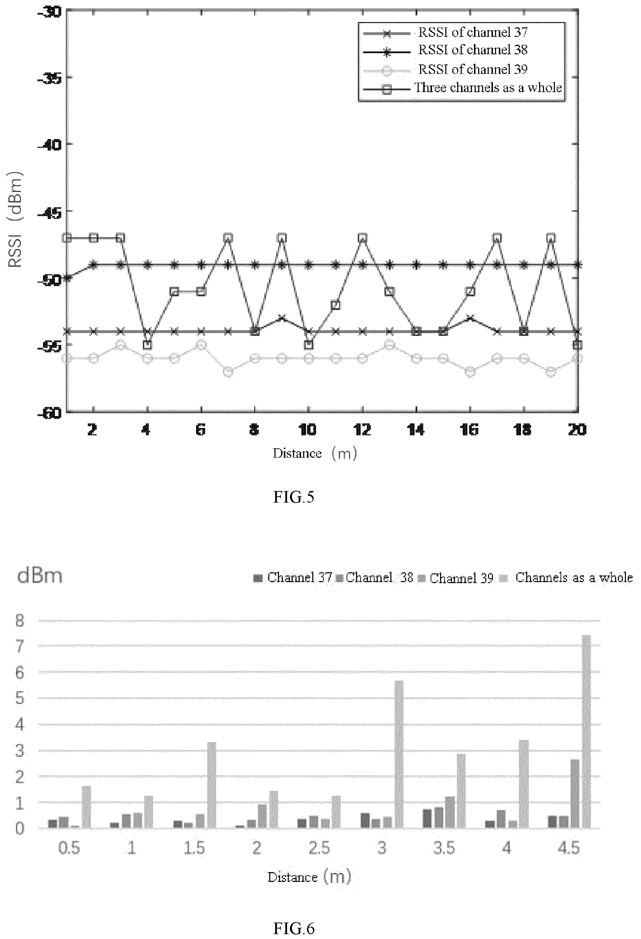

Fig. 5 shows experimental results of four RSSI measurements when the distance between the receiving end and the transmitting end is 1.5 meters. The RSSIs of the channels 37, 38 and 39 are measured separately in the first three measurements, and 20 measurement results are collected. The fourth measurement is performed for all the channels as a whole, and a total of 20 measurement results are collected. It can be seen from Fig. 5 that a fluctuation range of the RSSI is between 1 dBm and 2 dBm for a specific channel, while a fluctuation range of the RSSI is 8 dBm in the experimental results of all the channels as a whole. It can be seen that stability of the measured values of the RSSI obtained from the separate channels is obviously better than that of the measurement results obtained from all the channels as a whole.

In order to further verify the aforementioned conclusion, the scenarios of the channel 37, the channel 38, the channel 39 and all the channels as a whole are tested separately for different distances between the receiver and the transmitter. Fig. 6 shows standard deviations of measured values of RSSI obtained from the four scenarios of the channel 37, the channel 38, the channel 39 and all the channels as a whole when the distance between the receiver and the transmitter changes from 0.5 meters to 4.5 meters. The standard deviations reflect deviation degrees of the measured values from mean values. It can be known from Fig. 6 that for any given interval between the receiver and the transmitter, the standard deviation of a RSSI output value of a single channel is obviously lower than that of the scenario of all the channels as a whole, so the separate channels can significantly improve the ranging accuracy.

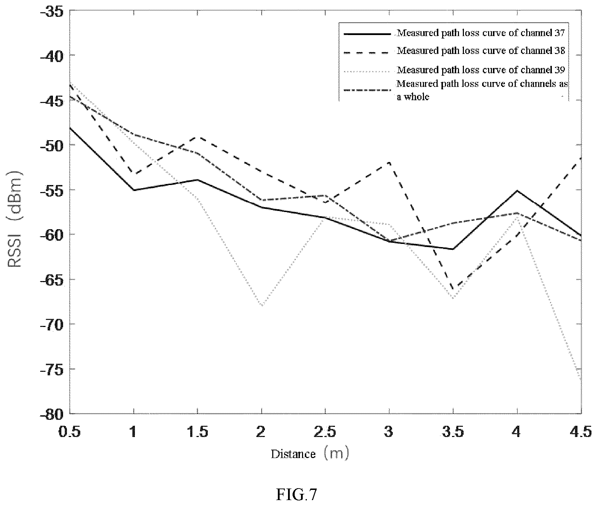

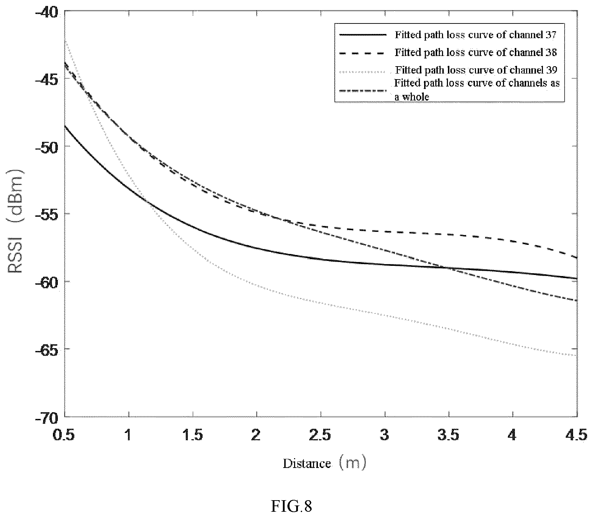

In the actual system, because of small-scale fading of radio signals, it is impossible to obtain an ideal curve of the RSSI monotonically decreasing with the increase of the distance as shown in Fig. 1. Fig. 7 shows relationship curves between measured distances between the receiver and the transmitter and measured RSSIs. However, it is not convenient for such curves to be directly used for distance estimation, so it is preferable to employ data fitting to acquire path loss models (as shown in Fig. 8), i.e. monotonous curves reflecting distance-RSSI corresponding relationships. It can be seen from Fig. 8 that the path loss models (i.e. the distance-RSSI corresponding relationships) are different for different channels used in Bluetooth communication, that is, the path loss models provided by the present invention are aimed at the distance-RSSI corresponding relationships between the transmitting end (the transmitter) and the receiving end (the receiver) under the corresponding specific channels.

It can be seen from the distance-RSSI curves shown in Fig. 8 that when the distance between the receiver and the transmitter is 4 meters, the RSSI values corresponding to the four scenarios of the channel 37, the channel 38, the channel 39 and all the channels as a whole are -59 dBm, -57 dBm, -65 dBm and -60 dBm respectively, where the difference between the channel 38 and the channel 39 is 8 dBm. Thus, under the condition of the same distance between the receiver and the transmitter, the RSSIs of different channels are obviously different. If the distance is estimated according to the free space path loss model in Fig. 3, the ranging error at this point exceeds 3 meters.

For another example, assuming that the distance between the receiver and the transmitter is 2.5 meters, at a certain moment, the measured signal strength comes from the channel 39, and the RSSI is about -62 dBm; and if the path loss model of all the channels as a whole is used, the distance corresponding to the measured value of -62 dBm is about 4.5 meters. Thus, the path loss model of all the channels as a whole brings a great ranging error.

Based on a conclusion of the aforementioned study, during distance estimation, a specific broadcast channel may be employed to construct a path loss model for radio signals; or the RSSIs of a plurality of broadcast channels may be simultaneously employed for distance estimation, and at this point, it is necessary to construct a path loss model for each broadcast channel separately, estimate a distance based on this according to the channels, and merge ranging results of different channels according to a certain principle, thus improving the ranging accuracy of the system.

Similarly, the inventors also observed similar results in the Bluetooth data channels based on frequency hopping communication, so it is necessary to construct a path loss model for a specific channel according to the RSSI of the specific data channel.

In view of the aforementioned analysis, when employing Bluetooth ranging, it is necessary to acquire a Bluetooth channel index corresponding to the RSSI while a measured value of the RSSI is read, so as to perform ranging based on signal path loss models constructed separately for different Bluetooth channels, so that the ranging accuracy can be improved.

It should be pointed out that although the above experiment studied the influence of the RSSI on ranging results under different channels (signal frequencies) by taking the Bluetooth system as an example, the inventors found that this phenomenon was also applicable to other wireless communication systems (such as WiFi and Zigbee) that perform ranging based on received signal strength.

To this end, the present invention proposes a ranging method based on received radio signal strength.

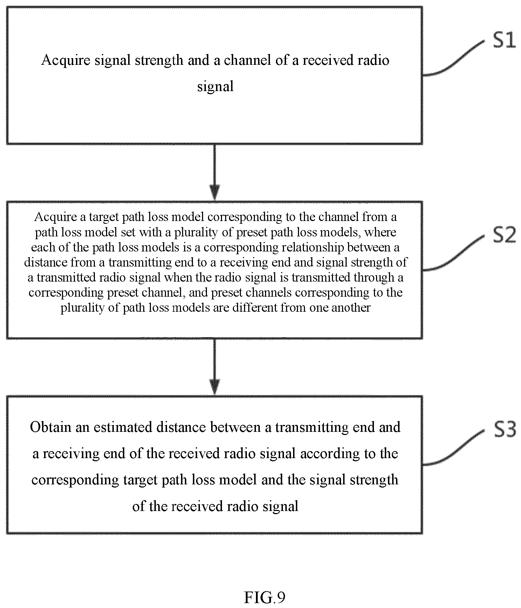

Referring to Fig. 9, Fig. 9 shows a schematic flowchart of main steps of the ranging method based on the received radio signal strength according to an embodiment of the present invention. As shown in Fig. 9, the ranging method based on the received radio signal strength in the embodiment of the present invention mainly includes Steps S1 to S3 below:

At Step S1, signal strength and a channel of a received radio signal are acquired.

In an example, in an application scenario of automobile digital key positioning, taking a mobile terminal serving as an automobile digital key as an example, a transmitting end (mobile terminal) transmits a radio signal to a receiving end arranged on a vehicle through broadcast channels. When the transmitting end periodically broadcasts information in the 37th, 38th and 39th channels, the receiving end scans a certain channel and receives corresponding information within a scanning time window; and at this point, an underlying software interface provided by a chip manufacturer may be used to simultaneously acquire the signal strength and the corresponding channel (also called channel index, e.g. 37).

In another example, taking a mobile terminal still serving as a transmitting end and a plurality of receiving ends (e.g. three receiving ends) arranged on a vehicle as an example, the transmitting end broadcasts information to the plurality of receiving ends in the 37th, 38th and 39th channels respectively, the corresponding receiving ends scan a certain channel and receive corresponding information within a scanning time window respectively; and at this point, the underlying software interface provided by the chip manufacturer may be used to simultaneously acquire the signal strength and the corresponding channels.

The mobile terminal may be a mobile phone, a smart wearable device and the like, and is not limited by the present invention.

At Step S2, a target path loss model corresponding to the channel is acquired from a path loss model set with a plurality of preset path loss models, where each of the path loss models is a corresponding relationship between a distance from a transmitting end to a receiving end and signal strength of a transmitted radio signal when the radio signal is transmitted through a corresponding preset channel, and preset channels corresponding to the plurality of path loss models in the path loss model set are different from one another.

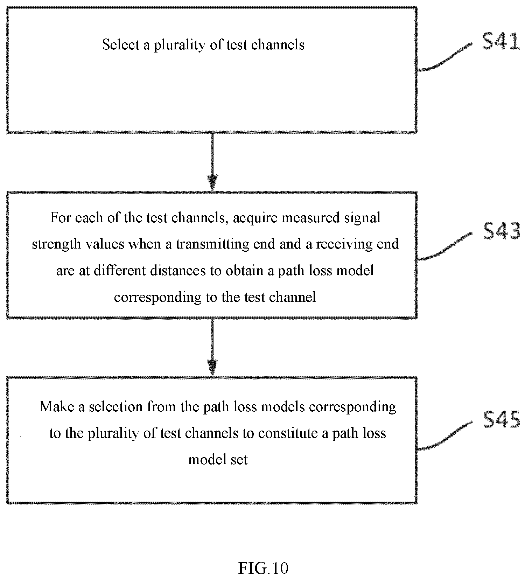

For the path loss model set with the plurality of preset path loss models, in a specific example, the method according to the present invention further includes steps of constructing the set, as shown in Fig. 10, including Steps S41 to S45:

At Step S41, a plurality of test channels are selected.

For Bluetooth communication, similar to the examples in Figs. 4 and 5, all the broadcast channels (channel indexes: 37 to 39) and all the 37 data channels (channel indexes: 0 to 36) may be selected as test channels.

Of course, those skilled in the art can only select some of the channels as test channels.

At Step S43, for each of the test channels, when the transmitting end and the receiving end are at different distances, measured signal strength values are collected to obtain a path loss model corresponding to the test channel.

For Bluetooth communication, similar to the example in Fig. 6, measured signal strength values may be collected when the distance between the transmitting end and the receiving end changes from 0.5 meters to 4.5 meters, so as to obtain a plurality of path loss models as shown in Fig. 7.

At Step S45, path loss models constituting the path loss model set are selected from the path loss models corresponding to the plurality of test channels.

In a specific example, Step S45 further includes:

selecting all the path loss models among the path loss models corresponding to the plurality of test channels to constitute the path loss model set.

For example, the path loss models corresponding to all the three broadcast channels and 37 data channels are selected to constitute the path loss model set, so that the path loss model set is stored for calling.

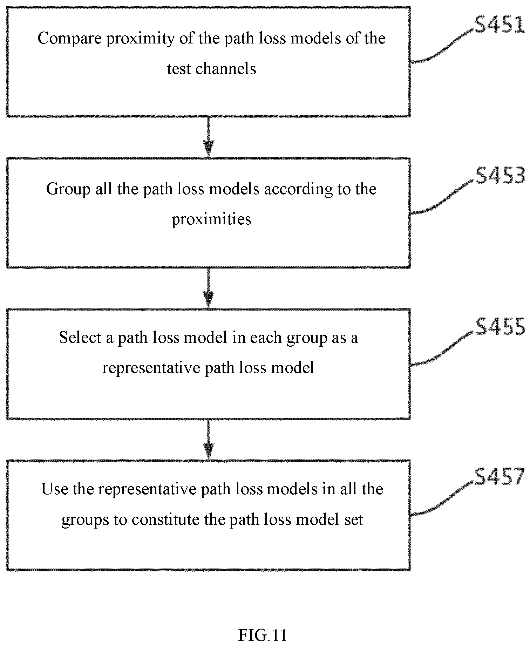

In addition, because a number of the data channels is much larger than that of the broadcast channels, it has been found through actual measurement that the path loss models of these 37 channels have some very proximate data channels. In order to weaken complexity of the system, increase a speed of computation and save a storage space, in another preferred embodiment of the present invention, Step S45 further includes using representative path loss models to constitute the path loss model set (as shown in Fig. 11), specifically including Steps S451 to S457:

At Step S451, proximity of the path loss models of the test channels are compared.

At Step S453, all the path loss models are grouped according to the proximities.

At Step S455, a path loss model in each group is selected as a representative path loss model.

At Step S457, the representative path loss models in all the groups are used to constitute the path loss model set.

In a specific example, for example, in data channels 0 to 36, it has been found through an experiment that the path loss models of some channels are relatively proximate (for example, the path loss models of channels 0 to 10 are relatively proximate (for example, by comparing the measured values of the RSSIs (an ordinate) of various path loss models under the same distance value (an abscissa as shown in Fig. 8), according to statistical analysis, mean square deviations of the measured values of RSSIs under all the distance values are less than a preset threshold, so they are considered to be proximate), the path loss models of channels 11 to 20 are relatively proximate, and the path loss models of channels 21 to 36 are relatively proximate), so the path loss model of channel 10 is taken as a path loss model representing channels 0 to 10, the path loss model of channel 20 as a path loss model representing channels 11 to 20 and the path loss model of channel 36 as a path loss model representing channels 21 to 36 respectively, thus constituting a path loss model set which only needs to include the representative path loss models corresponding to channels 10, 20 and 36. Thus, the storage space is saved, and a calling speed can be increased in subsequent use as well.

In this way, the present invention constructs the path loss model set in advance for subsequent ranging.

Step S2 further includes: acquiring a target path loss model corresponding to a channel of at least one target radio signal among a plurality of radio signals from the path loss model set.

In an example, if radio signals received by the receiving end are radio signals corresponding to the channel 37 and the channel 39, then the path loss models of the channels 37 and 39 are obtained from the path loss model set in which the path loss models of the three broadcast channels are pre-stored. Of course, the present invention is not limited to this. For example, one of the path loss models may be acquired from the path loss model set for use, e.g. the path loss model corresponding to the channel 39.

In another example, for example, if radio signals received by the receiving end are radio signals corresponding to the channel 5, the channel 15 and the channel 22, then the path loss models of the channels 5, 15 and 22 are obtained from the path loss model set in which the path loss models of the 37 data channels are pre-stored. Of course, the present invention is not limited to this. For example, one of the path loss models may be acquired from the path loss model set for use, e.g. the path loss model corresponding to the channel 5.

In another example corresponding to the representative path loss models, for example, if radio signals received by the receiving end are still the radio signals corresponding to the channel 5, the channel 15 and the channel 22, then the representative path loss model 10 corresponding to the channel 5, the representative path loss model 20 corresponding to the channel 15 and the representative path loss model 36 corresponding to the channel 22 are obtained from the path loss model set in which the three representative path loss models are pre-stored. Of course, the present invention is not limited to this. For example, one of the representative path loss models may be acquired from the path loss model set for use, e.g. the representative path loss model 10 corresponding to the channel 5.

At Step S3, an estimated distance between a transmitting end and a receiving end of the received radio signal is obtained according to the corresponding target path loss model and the signal strength of the received radio signal.

In a specific embodiment, Step S3 further includes Steps S30 and S32:

At Step S30, for each of the target radio signals, a distance corresponding to signal strength of the target radio signal is obtained according to the corresponding path loss model.

At Step S32, the distances corresponding to the signal strength of all the target radio signals are merged to give an estimated distance between the transmitting end and the receiving end.

For example, taking acquisition of the path loss models corresponding to the channels 37 and 39 as an example, an estimated distance value corresponding to a RSSI under the channel 37 is obtained according to the path loss model of the channel 37 and an estimated distance value corresponding to a RSSI under the channel 39 according to the path loss model of the channel 39, and then the two estimated distance values are merged to give a final estimated distance value.

For merging, weighted averaging may be performed on these two estimated distance values to give the final estimated distance value, and those skilled in the art can also determine different weights or merge a plurality of distances by employing different merging methods according to actual conditions. The merging methods for the plurality of distances should not limit the protection scope of the present invention.

For another example, taking acquisition of the path loss models corresponding to the channels 5, 15 and 22 as an example, an estimated distance value corresponding to a RSSI under the channel 5 is obtained according to the path loss model of the channel 5; an estimated distance value corresponding to a RSSI under the channel 15 is obtained according to the path loss model of the channel 15; an estimated distance value corresponding to a RSSI under the channel 22 according to the path loss model of the channel 22; and then the three estimated distance values are merged to give a final estimated distance value. Of course, those skilled in the art can understand that merging can still be performed by weighted averaging operation.

For another example, taking acquisition of representative path loss model 10, representative path loss model 20 and representative path loss model 36 as an example, an estimated distance value corresponding to a RSSI under the channel 10 (i.e. an estimated distance value calculated in the example that the representative path loss model is employed when the radio signal is received by the receiving end through the channel 5 in step S2) is obtained according to the path loss model corresponding to the channel 10, an estimated distance value corresponding to a RSSI under the channel 20 (i.e. an estimated distance value calculated in the example that the representative path loss model is employed when the radio signal is received by the receiving end through the channel 15 in step S2) is obtained according to the path loss model corresponding to the channel 20, an estimated distance value corresponding to a RSSI under the channel 36 (i.e. an estimated distance value calculated in the example that the representative path loss model is employed when the radio signal is received by the receiving end through channel 22 in step S2) is obtained according to the path loss model corresponding to the channel 36, and then these three estimated distance values are merged to obtain a final estimated distance value. Of course, those skilled in the art can understand that merging can still be performed by weighted averaging operation.

Based on Steps S1 to S3 above, when the distance between the transmitting end and the receiving end is measured and estimated by utilizing the radio signal strength, a channel used in wireless communication is identified, and a more accurate distance result is then acquired according to a corresponding relationship between the signal strength and a distance corresponding to the channel used, so the present invention is suitable for scenarios having high requirements on positioning accuracy, such as automobile digital key positioning.

It should be pointed out that although the above experiment has studied the influence of the RSSI on the ranging results under different channels (signal frequencies), the proposed method of estimating a distance by employing different signal path loss models according to different channels is also applicable to other wireless communication systems that perform ranging based on the received signal strength, such as WiFi and Zigbee (it should be noted that those skilled in the art can understand that the channels of the WiFi and the Zigbee are not divided into broadcast channels and data channels, but a distance can be estimated by employing different signal path loss models according to different channels, and the principle is the same).

It should be pointed out that although all the steps have been described in a specific order in the aforementioned embodiment, those skilled in the art can understand that in order to achieve the effect of the present invention, it is not necessary for different steps to be executed in such an order, but they can be executed simultaneously (concurrently) or in other orders, and these changes shall all fall within the protection scope of the present invention.

The present invention further provides a ranging apparatus based on received radio signal strength.

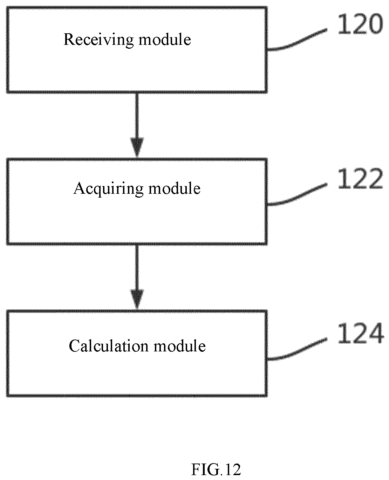

Referring to Fig. 12, Fig. 12 is a main structural block diagram of a ranging apparatus based on received radio signal strength according to an embodiment of the present invention. As shown in Fig. 12, the ranging apparatus based on the received radio signal strength in the embodiment of the present invention mainly includes:

a receiving module 120, configured for acquiring signal strength and a channel of a received radio signal;

an acquiring module 122, configured for acquiring a target path loss model corresponding to the channel from a path loss model set with a plurality of preset path loss models, where each of the path loss models is a corresponding relationship between a distance from a transmitting end to a receiving end and signal strength of a transmitted radio signal when the radio signal is transmitted through a corresponding preset channel, and preset channels corresponding to the plurality of path loss models are different from one another; and

a calculation module 124, configured for obtaining an estimated distance between the transmitting end and the receiving end of the received radio signal according to the corresponding target path loss model and the signal strength of the received radio signal.

The aforementioned ranging apparatus based on the received radio signal strength can be used to implement the embodiment of the ranging method based on the received radio signal strength shown in Fig. 9, and for both, the technical principles, solved technical problems and produced technical effects are similar. It can be clearly understood by those skilled in the art that for convenience and conciseness of description, they can refer to contents described in the embodiment of the ranging method based on the received radio signal strength for the specific operating process of the apparatus and related explanation thereof, which will not be repeated herein.

It can be understood by those skilled in the art that all or part of the flows in the method of the aforementioned embodiment implemented by the present invention may also be carried out by related hardware instructed by a computer program, the computer program may be stored in a computer-readable storage medium; and when executed by a processor, the computer program can implement the steps of each of the aforementioned method embodiments. The computer program includes computer program codes which may be in a source code form, an object code form, an executable file form or some intermediate forms, etc. The computer-readable storage medium may include any entity or apparatus, medium, USB flash disk, mobile hard disk, magnetic disk, optical disk, computer memory, read-only memory, random access memory, electric carrier signal, telecommunication signal, software distribution medium and the like which can carry the computer program codes. It should be noted that the contents contained in the computer-readable storage medium may be appropriately increased or decreased according to the requirements of legislation and patent practice in a jurisdiction. For example, in some jurisdictions, according to legislation and patent practice, the computer-readable storage medium does not include electric carrier signals and telecommunication signals.

An embodiment of the present invention further provides an electronic device. In an embodiment of the electronic device according to the present invention, the electronic device includes a processor and a memory, where the memory may be configured to store a program for executing the ranging method based on the received radio signal strength according to the aforementioned method embodiment, and the processor may be configured to execute a program in the memory, including but not limited to the program for executing the ranging method based on the received radio signal strength according to the aforementioned method embodiment. In order to facilitate explanation, only the part related to the embodiment of the present invention is shown. For specific technical details not disclosed, refer to the method part of the embodiment of the present invention.

The aforementioned electronic device may include a plurality of processors and memories. The plurality of processors are configured to jointly implement the ranging method based on the received radio signal strength according to the aforementioned embodiment, and the steps in the ranging method to which each processor is assigned should not improperly limit the protection scope of the present invention.

For example, when the plurality of processors are distributed processors (such as a cloud server and a local processor), Steps S1 to S3 above may be processed by the local processor, and Steps S41 to S45 and Steps S451 to S457 may be processed by the cloud server. More specifically, Steps S41 to S45 and Steps S451 to S457 may be implemented by the cloud server of the Internet of Vehicles. After the preset path loss model set is acquired, the local processor located at a vehicle end stores the path loss model set, and the local processor executes Steps S1 to S3.

An embodiment of the present invention further provides a vehicle, which includes the aforementioned electronic device.

An embodiment of the present invention further provides a wireless communication system, which includes a mobile terminal as a transmitting end and a vehicle as a receiving end, where the vehicle is the aforementioned vehicle.

Further, it should be understood that because setting of each module is merely intended to describe functional units of the apparatus according to the present invention, physical devices corresponding to these modules may be the processor itself or a part of software, a part of hardware or a part of the combination of software and hardware in the processor. Therefore, a number of each module in the accompanying drawings is merely schematic.

Those skilled in the art can understand that each module in the apparatus may be separated or combined adaptively. Such separation or combination of the specific modules will not cause the technical solution to depart from the principle of the present invention, so the technical solution after separation or combination shall fall within the protection scope of the present invention.

So far, the technical solution of the present invention has been described in conjunction with the preferred embodiments shown in the accompanying drawings, but it is easy for those skilled in the art to understand that the protection scope of the present invention is obviously not limited to these specific embodiments. Under the premise of not departing from the principle of the present invention, those skilled in the art can make equivalent changes or substitutions to relevant technical features, and the technical solutions after these changes or substitutions shall all fall within the protection scope of the present invention.

**Claims**

1. A ranging method based on received radio signal strength, comprising:

   acquiring signal strength and a channel of a received radio signal;
   acquiring a target path loss model corresponding to the channel from a path loss model set with a plurality of preset path loss models, wherein each of the path loss models is a corresponding relationship between a distance from a transmitting end to a receiving end and signal strength of a transmitted radio signal when the radio signal is transmitted through a corresponding preset channel, and preset channels corresponding to the plurality of path loss models in the path loss model set are different from one another; and
   obtaining an estimated distance between a transmitting end and a receiving end of the received radio signal according to the corresponding target path loss model and the signal strength of the received radio signal.

2. The method according to claim 1, wherein

   there are a plurality of received radio signals; and

the acquiring target path loss models corresponding to the channels from a path loss model set with a plurality of preset path loss models comprises:

acquiring a target path loss model corresponding to a channel of at least one target radio signal among a plurality of radio signals from the path loss model set;
the obtaining an estimated distance between a transmitting end and a receiving end of the received radio signal according to the corresponding target path loss model and the signal strength of the received radio signal comprises:

for each of the target radio signals, obtaining a distance corresponding to signal strength of the target radio signal according to the corresponding path loss model; and
merging the distances corresponding to the signal strength of all the target radio signals to give an estimated distance between the transmitting end and the receiving end.

3. The method according to claim 1 or 2, further comprising:

selecting a plurality of test channels;
for each of the test channels, collecting measured signal strength values when the transmitting end and the receiving end are at different distances to obtain a path loss model corresponding to the test channel; and
selecting path loss models constituting the path loss model set from the path loss models corresponding to the plurality of test channels.

4. The method according to claim 3, wherein the selecting path loss models constituting the path loss model set from the path loss models corresponding to the plurality of test channels comprises:
selecting all the path loss models among the path loss models corresponding to the plurality of test channels to constitute the path loss model set.

5. The method according to claim 3, wherein the selecting path loss models constituting the path loss model set from the path loss models corresponding to the plurality of test channels comprises:

comparing proximity of the path loss models of the test channels;
grouping all the path loss models according to the proximities;
selecting a path loss model in each group as a representative path loss model; and
using the representative path loss models in all the groups to constitute the path loss model set.

6. The method according to claim 5, wherein the acquiring a target path loss model corresponding to a channel of at least one target radio signal among a plurality of radio signals from the path loss model set comprises: acquiring a representative path loss model corresponding to the channel of the at least one radio signal.

7. The method according to claim 3, wherein the collecting measured signal strength values when the transmitting end and the receiving end are at different distances to obtain a path loss model corresponding to the test channel comprises:
linearly fitting the measured signal strength values when the transmitting end and the receiving end are at different distances to obtain the path loss model corresponding to the test channel.

8. The method according to claim 2, wherein the acquiring signal strength and a channel of a received radio signal comprises:

acquiring a plurality of radio signals transmitted by the transmitting end and received by a receiving end within a preset time interval; or
acquiring a plurality of radio signals transmitted by the transmitting end and received by a plurality of receiving ends respectively.

9. A computer-readable storage medium, storing a plurality of program codes, wherein the program codes are suitable for being loaded and run by a processor to execute the method according to any of claims 1 to 8.

10. An electronic device, comprising at least one processor and at least one memory, a program being stored in the memory, wherein when the processor executes the program, the method according to any of claims 1 to 8 is

implemented.

FIG.1

FIG.2

FIG.3

FIG.4

FIG.5

FIG.6

FIG.7

FIG.8

Acquire signal strength and a channel of a received radio signal

S1

Acquire a target path loss model corresponding to the channel from a path loss model set with a plurality of preset path loss models, where each of the path loss models is a corresponding relationship between a distance from a transmitting end to a receiving end and signal strength of a transmitted radio signal when the radio signal is transmitted through a corresponding preset channel, and preset channels corresponding to the plurality of path loss models are different from one another

S2

Obtain an estimated distance between a transmitting end and a receiving end of the received radio signal according to the corresponding target path loss model and the signal strength of the received radio signal

S3

FIG.9

Select a plurality of test channels — S41

For each of the test channels, acquire measured signal strength values when a transmitting end and a receiving end are at different distances to obtain a path loss model corresponding to the test channel — S43

Make a selection from the path loss models corresponding to the plurality of test channels to constitute a path loss model set — S45

FIG.10

Compare proximity of the path loss models of the
test channels

S451

Group all the path loss models according to the
proximities

S453

Select a path loss model in each group as a
representative path loss model

S455

Use the representative path loss models in all the
groups to constitute the path loss model set

S457

FIG.11

FIG.12

## INTERNATIONAL SEARCH REPORT

| | International application No. |
|---|---|
| | **PCT/CN2023/121874** |

**A.    CLASSIFICATION OF SUBJECT MATTER**

G01S11/06(2006.01)i

According to International Patent Classification (IPC) or to both national classification and IPC

**B.    FIELDS SEARCHED**

Minimum documentation searched (classification system followed by classification symbols)

IPC： G01S

Documentation searched other than minimum documentation to the extent that such documents are included in the fields searched

Electronic data base consulted during the international search (name of data base and, where practicable, search terms used)

CNTXT, WPABS, ENTXT, ENTXTC, CNKI, Bing: 测距, 定位, 信道, 频道, 子频带, 信号, 接收, 强度, 路损, RSSI, RSS, ranging, position+, channel, sub-band, signal, receive+, strength, path, loss

**C.    DOCUMENTS CONSIDERED TO BE RELEVANT**

| Category* | Citation of document, with indication, where appropriate, of the relevant passages | Relevant to claim No. |
|---|---|---|
| PX | CN 115494489 A (NIO AUTOMOTIVE TECHNOLOGY (ANHUI) CO., LTD.) 20 December 2022 (2022-12-20) <br> description, paragraphs 23-78 | 1-10 |
| X | CN 113702959 A (TELINK MICROELECTRONICS (SHANGHAI) CO., LTD.) 26 November 2021 (2021-11-26) <br> description, paragraphs 21-64 | 1-2, 8-10 |
| Y | CN 113702959 A (TELINK MICROELECTRONICS (SHANGHAI) CO., LTD.) 26 November 2021 (2021-11-26) <br> description, paragraphs 21-64 | 3-7 |
| Y | CN 103605126 A (ZTE INTELLIGENT IOT TECHNOLOGY CO., LTD.) 26 February 2014 (2014-02-26) <br> description, paragraphs 36-51 | 3-7 |
| Y | CN 105871486 A (SHANGHAI ADVANCED RESEARCH INSTITUTE, CHINESE ACADEMY OF SCIENCES) 17 August 2016 (2016-08-17) <br> description, paragraphs 1-53 | 3-7 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 December 2023** | **21 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**

</div>

| | International application No. |
|---|---|
| | **PCT/CN2023/121874** |

**C. DOCUMENTS CONSIDERED TO BE RELEVANT**

| Category* | Citation of document, with indication, where appropriate, of the relevant passages | Relevant to claim No. |
|---|---|---|
| A | CN 104813189 A (INTEL CORP.) 29 July 2015 (2015-07-29)<br>entire document | 1-10 |
| A | CN 111381226 A (CHANG'AN UNIVERSITY) 07 July 2020 (2020-07-07)<br>entire document | 1-10 |
| A | WO 2022117523 A2 (NORDIC SEMICONDUCTOR ASA) 09 June 2022 (2022-06-09)<br>entire document | 1-10 |

Form PCT/ISA/210 (second sheet) (July 2022)

## INTERNATIONAL SEARCH REPORT
### Information on patent family members

| International application No. |
| --- |
| **PCT/CN2023/121874** |

| Patent document cited in search report | | | Publication date (day/month/year) | Patent family member(s) | | | Publication date (day/month/year) |
| --- | --- | --- | --- | --- | --- | --- | --- |
| CN | 115494489 | A | 20 December 2022 | None | | | |
| CN | 113702959 | A | 26 November 2021 | None | | | |
| CN | 103605126 | A | 26 February 2014 | CN | 103605126 | B | 29 June 2016 |
| CN | 105871486 | A | 17 August 2016 | CN | 105871486 | B | 30 January 2018 |
| CN | 104813189 | A | 29 July 2015 | WO | 2014105205 | A1 | 03 July 2014 |
| | | | | US | 2014185464 | A1 | 03 July 2014 |
| | | | | US | 9310465 | B2 | 12 April 2016 |
| | | | | EP | 2939048 | A1 | 04 November 2015 |
| | | | | EP | 2939048 | A4 | 16 November 2016 |
| | | | | CN | 104813189 | B | 08 March 2017 |
| CN | 111381226 | A | 07 July 2020 | CN | 111381226 | B | 29 March 2022 |
| WO | 2022117523 | A2 | 09 June 2022 | WO | 2022117523 | A3 | 14 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202211453840

**Non-patent literature cited in the description**

• **MYO MIN THEIN** ; **SON NGUYEN** ; **DANIELLE KENNON**. COMPARING THE ACCURACY OF BLUETOOTH LOWENERGY AND UWBTECHNOLOGY FOR IN-ROOM POSITIONING. WORCESTER POLYTECHNIC INSTITUTE, 22 April 2019